# EUROPEAN PATENT SPECIFICATION

(11) **EP 3 191 782 B1**
(45) Date of publication and mention of the grant of the patent: **04.11.2020**
(21) Application number: 15839353.8
(22) Date of filing: 08.09.2015
(51) Int. Cl.: F28D 5/00, F28F 13/02, F28F 3/08, F24F 13/00

(54) **COMPACT INDIRECT EVAPORATIVE COOLER**
KOMPAKTER KÜHLER MIT INDIREKTER VERDAMPFUNG
REFROIDISSEUR COMPACT ÉVAPORATIF INDIRECT

(30) Priority: 08.09.2014 US 201462047160 P
(43) Date of publication of application: 19.07.2017
(73) Proprietor: F.F. Seeley Nominees Pty Ltd., Lonsdale, SA 5160 (AU)
(72) Inventor: GILBERT, Robert William, Lonsdale, South Australia 5160 (AU); SWINDON, David Mark, Lonsdale, South Australia 5160 (AU); CHEN, Nan, Lonsdale, South Australia 5160 (AU); MAHONEY, Shaun, Lonsdale, South Australia 5160 (AU)
(74) Representative: Elzaburu S.L.P.
(86) International application number: PCT/AU2015/050528
(87) International publication number: WO 2016/037232

(56) References cited:
- US-A1- 2004 061 245
- US-A1- 2004 061 245
- US-A1- 2005 217 303
- US-A1- 2005 217 303
- US-A1- 2010 018 234
- US-A1- 2010 018 234
- US-A1- 2011 209 858
- US-A1- 2011 209 858
- US-A1- 2011 302 946
- US-A1- 2011 302 946

## Description

### Technical Field

The invention relates to an indirect evaporative cooler, and in particular, an indirect evaporative cooler with a compact core. The compact core can also be used in a heat recovery heat exchanger. An indirect evaporative cooler with a passage length of 300 mm and a passage height of 2 to 3 mm is known from [0053] of US 2011/0209858A1.

### Background of the Invention

At its core, a modern indirect evaporative cooler typically comprises a stack of thin parallel spaced-apart plates. The plates define alternating wet and dry air-flow passages. In the wet passages a "working" airstream passes over wetted surfaces, accepting and carrying away sensible heat as well as latent heat of evaporation, leaving evaporatively cooled wet surfaces. In the dry passages an initially warm airstream is cooled as heat is transferred by convective transfer from the airstream to the cooled plate surfaces and by conductive heat transfer through the plates. The temperature gradient between the airstreams on either side of the thin plates drives the flow of heat from dry passage side to wet passage side.

A two-stage evaporative cooler improves over a single-stage cooler in that an airstream pre-cooled in a first or "indirect" cooling stage is used as the working air stream in the wet passages in a second or "direct" stage. Alternatively, the cooled airstream is divided into two streams, one of which is used to cool the living space, the other of which is returned as "return air" to the wet passages. A pre-cooled working air stream can carry away more heat from the wetted surfaces, further lowering the temperature of the evaporatively cooled wet surfaces, thus lowering the temperature of the airstream being conditioned in the dry passages.

In a heat-scavenging heat exchanger, on the other hand, the thermodynamics are worked in reverse. For example, when heating a living space in winter, cold outside air is drawn in through dry air channels. Warm humid air leaving the living space passes through wet channels in counter-current flow. As the outgoing warm humid air passes adjacent to the cold incoming air, the water vapor in the outgoing air condenses, evolving heat of condensation (equal to the heat of vaporization consumed in cooling), and transferring sensible heat across the metal plates to warm the incoming air in the dry passages. As a result, a good portion of the heat leaving the living space can be recaptured and returned to the living space.

Indirect evaporative cooling systems offer many advantages over mechanically driven refrigerant-compression-type cooing systems, such as lower electrical consumption, higher reliability, and freedom from environmentally detrimental refrigerants such as R-134.

However, although many improvements have been made over the years, a major disadvantage in evaporative cooling systems is the considerable bulkiness of the heat exchanger, and particularly the core. The cooling capacity of the evaporative cooler is generally considered to be a function of the total evaporative surface housed in the system. A commercial evaporative cooler can be several times the size of a comparable refrigerant-compression based cooling system.

Attempts have been made to improve the efficiency of heat exchangers. As explained in US Patent No. 5,718,848, the boundary layer of gas adjacent the plates constitutes an obstruction to transfer of energy. Gases are notorious insulators against conduction, and air is very resistant to heat transfer. According to US 5,718,848, evaporation of water into the working air stream is improved by using multiple wicks positioned so that sufficient turbulence is developed to effect periodic restart of the process of evaporation of moisture from the wicks.

A more recent proposal for improving heat exchanger efficiency is described in US Patent No. 8,636,269. The evaporative heat exchanger is formed of corrugated sheets of material having one wettable surface and an opposed dry vapour-resistant surface. Sheets are stacked with wettable surfaces facing each other to form wet passages and dry surfaces facing each other to form dry passages between the sheets. The general direction of air flow is at an angle to the corrugations. Working air enters the labyrinthic matrix and encounters numerous intersections of the adjacent corrugated sheets. At each of these intersections there is intense interaction between air and water, resulting in rapid evaporation of water from the wetted surfaces, thereby humidifying the working air and cooling the water on the wetted surfaces. In the dry passages on the dry side of the sheets, hot incoming air to be conditioned loses thermal energy by interaction with the evaporatively cooled sheet. According to US 8,636,269, heat exchange between the wet and dry passages and evaporation within the wet passages can readily take place due to the intensity of mixing promoted by the corrugated construction.

The conventional wisdom is thus to design the wet and dry air passages for increased turbulence in order to promote heat transfer and evaporative cooling. However, as turbulence increases, so does resistance to flow, which can be measured as increased pressure drop over distance. This pressure drop must be overcome, for example, by provision of additional or higher power air movers, e.g., fans, which undesirably increases power consumption of the system. Adding fans also increases construction and operating costs. It is known that pressure drops can be mitigated by increasing the height of the airflow passages. However, considering that air is an insulator, as the height of air passages is increased, the effectiveness of heat transfer is lowered. Further, an increase in plate spacing will increase the total height, and thus bulk, of the heat exchanger core.

It is disclosed in US Patent No. 8,636,269 that airflow at a shallower angle to the direction of the corrugations results in smoother airflow and lower resistance, but at a penalty of reduced heat transfer efficiency. The patent teaches that this loss of heat transfer efficiency can be regained by extending the overall length of the core. Increasing passage length increases the bulk of the core. And since pressure drop increases as the length of the air passages is increased, additional air movers will also be required. Thus, bulkiness appears to be an inherent characteristic of heat exchangers.

US Patent Application No. 2004/0061245 (Maisotsenko et al) teaches an evaporative air cooling system with an improved heat exchange surface and an improved system of distributing evaporating fluids. The cooling system is comprised of plates having a water conducting layer on one side and a low permeability layer on the other side. The low permeable layer exhibits low conductivity to heat except when very thin and is preferably plastic. Since heat transfer is good perpendicularly through a plastic layer but poor along the surface of a plastic layer, the "result of this differential heat transferability is that heat will transfer from one side of the plate to the other along the interface of the plastic while at the same time heat will not readily transfer along the surface. The result is that discrete temperatures and a temperature differential can occur at different points in the plate and it will not be averaged due to the heat transfer by the plate." (paras. [0026]-[0027]). Also mentioned is that when plate spacing is within certain bracketed values (be 1.57 mm to 1.83 mm, 2.17 mm to 2.33 mm, 2.16 to 2.87 mm, or 3.13 mm to 3.39 mm), the pressure drop across plates is reduced from 1% to 15%. Further, deposit build-up is reduced along the plate surfaces due to the transverse quarter wave, i.e., turbulence, increasing the dynamic energy of the flow in the direction of the flow at the boundary layer. Thus, Maisotsenko et al adhere to the accepted wisdom that dynamic energy, i.e., turbulence, is needed in the air flow to break up the boundary layer for efficient heat transfer.

There remains a need for a more compact one or two stage evaporative cooler, as well as a compact heat exchanger for recapture of heat.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

In this specification, a statement that an element may be "at least one of' a list of options is to be understood that the element may be any one of the listed options, or may be any combination of two or more of the listed options.

### Summary of the Invention

According to a first aspect the present invention provides an indirect evaporative cooler as defined in claim 1.

In some embodiments of the invention, the passage height of at least the dry air flow passages and the length of the passages fall within following ranges :

| Passage | Passage |
|---|---|
| Length(mm) | Height (mm) |
| 200 | 1.8 - 2.5 |
| 100 | 1.5-2.2 |
| 75 | 1.1 - 1.7 |
| 50 | 0.9 - 1.1 |
| 25 | 0.65 - 0.7 |

In some embodiments of the invention the passage length is in the range from 80 to 200 mm.

In some embodiments of the invention the space between plates defining dry passage height is from 0.6 mm to 2.5 mm, more preferably from 0.7 mm to 1.4 mm, and more preferably from 0.8 mm to 1.2 mm.

In some embodiments of the invention, the space between plates defining wet passage height is from 0.6 mm to 2.5 mm, more preferably from 0.7 mm to 1.4 mm, more preferably from 0.8 mm to 1.2 mm.

Desiring a more compact heat exchanger core, and realizing that the "conventional wisdoms" of core design inevitably produce a large size indirect evaporative cooler core (i.e., using turbulence to break down the insulating boundary layer and thus promote heat transfer; spacing plates far enough apart to prevent constriction of flow, etc.), the present inventors developed a design for a new type of core with surprising compactness and efficiency.

The present invention recognises that when the spacing between the plates is greatly reduced and, at the same time, care is taken to ensure a substantially laminar flow rather than turbulent flow, good evaporative cooling and good heat exchange occurs, allowing the length of the passages to be reduced. And, as the passage length is reduced, the pressure drop along this shorter passage length remains acceptable.

That is, by pushing air at high shear rates through passages having narrower spacing between plates - and shorter passages - the evaporative cooling system becomes not only compact in size, it also becomes efficient.

The advantages of the inventive design include:
good heat transfer since thinner boundary layers in the narrower passages minimize the insulating effect of air,
more plate area for a given stack height since plate spacing is reduced,
shorter passage lengths - as little as only 20% of the conventional passage length - a major advantage in an installed system, and
no flow impedance attributable to turbulence-induced flow resistance, since flow is laminar.

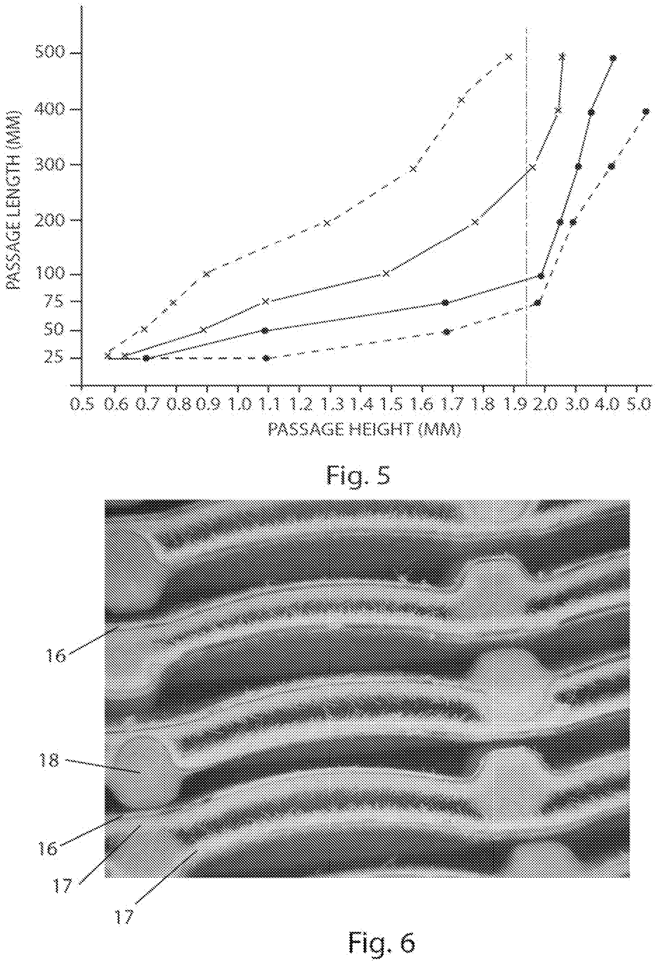

The plates may be formed of any suitable material or materials, including metal and plastic, for example, PVC. The plates preferably have an absorbent flock on one side. The plates are preferably formed with long arched sections between standoff spacers (see Fig. 6), with a radius of e.g. 10mm, whereby static air in corners is minimized.

The invention has applications not only for indirect evaporative coolers, but also to air-to-air heat exchangers (heat scavengers, heat recovery systems) and/or water-to-air heat exchangers.

### Brief Description of the Drawings

An example of the invention will now be described with reference to the accompanying drawings, in which like reference numbers indicate similar parts, and in which:
Fig. 1 shows a simplified core comprised of a stack of plates with alternating wet and dry passages;
Fig. 2 shows the CFD model, with variables being plate spacing or air passage height (H) and passage length (L);
Fig. 3 shows the results of CFD in the range 0.6 to 1.5 mm passage height and 25 mm to 100 mm passage length;
Fig. 4 shows the results of CFD in the range 0.6 to 5 mm passage height and 25 to 500 mm passage length;
Fig. 5 is a graph showing inventive and preferred passage heights and lengths,
Fig. 6 is a close-up of a practical embodiment of a core structure showing long arched sections between standoff spacers;
Fig. 7 schematically represents an evaporative cooler; and

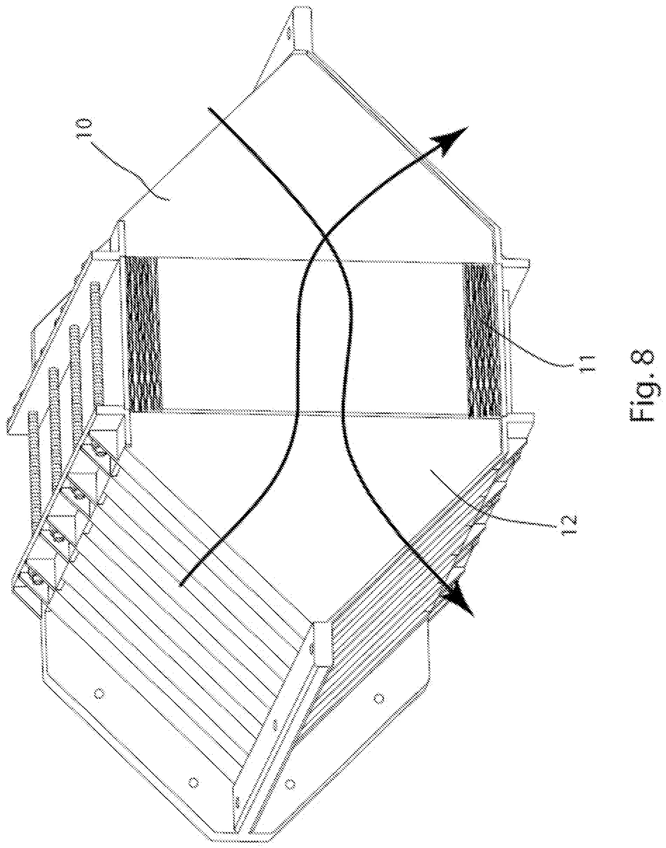

Fig. 8 shows the design of an evaporative cooler according to one embodiment of the invention.

### Description of the Preferred Embodiments

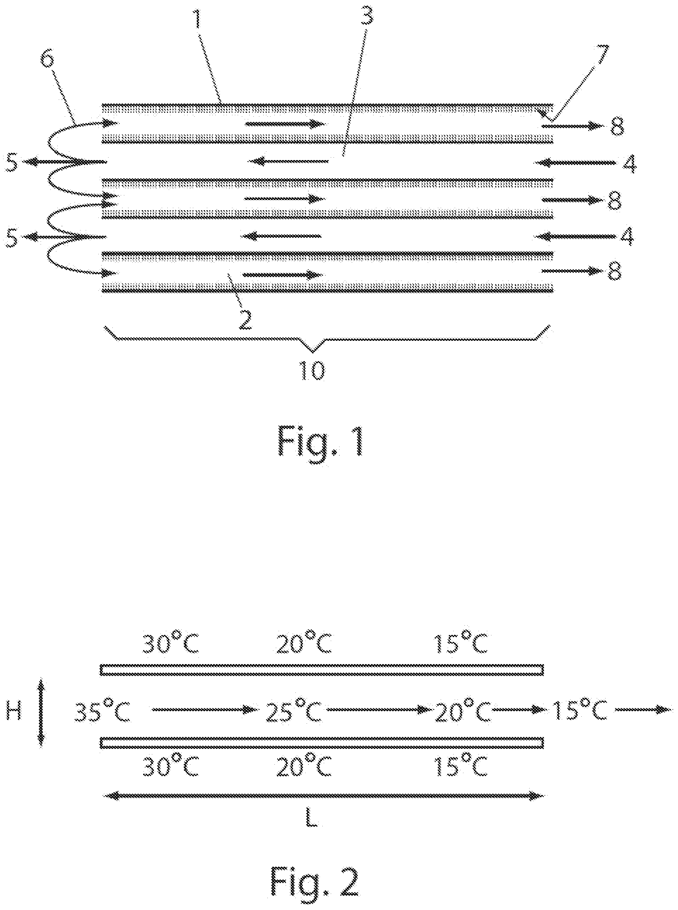

Fig. 1 shows a known airflow configuration for a single core evaporative cooler system comprising parallel heat exchange plates 1. Each plate has a wettable surface on one side and a dry vapour-resistant surface on the opposite side. Plates are stacked with wettable surfaces facing each other to form wet air passages 2 and dry surfaces facing each other to form dry air passages 3 between the plates. Incoming source air 4 to be cooled is directed through the dry passages 3 of heat exchanger 10. Upon exiting the dry passages, the dry cooled air stream is divided approximately evenly into a "supply air" stream 5 for cooling a living space and "return" or "working" air stream 6 which is directed into the wet passages 2. The wet passages 2 have a hydrophilic surface provided with a wicking material 7 which is capable of being kept continuously wet by being intermittently or continuously charged with water. Water evaporates from the wicking surfaces and is carried away by the cool dry air (which has been pre-cooled by the initial passage through the cool dry channel), extracting latent heat, cooling the plates. After passing through the wet passage 2, the now warmed moisture-laden return air stream 8 is vented to the atmosphere. In turn, since the pre-cooled return air is more effective in lowering the temperature of the hydrophilic surface 7, the incoming air stream 4 in the dry passages 3 is more effectively cooled by contact with the dry-side surfaces of the plates 1. The temperature gradient between the air streams on either side of the thin thermally conductive plate 1 drives the heat flow from dry passage side to wet passage side.

The spacing between the plates 1 is approximately the same whether the plates 1 are defining a wet passage 2 or a dry passage 3. In the illustrated example, the wicking material extends about one quarter of the way into the wet passages 2, leaving about 50% of the passage unobstructed. Since the volume of return air is only about 50% of the incoming air, it follows that the effective height of the wet air passage 2 for the return air need only be about 50% of that of the height of the dry air passage 3 for the incoming air.

The incoming air 4 may be either fresh air from the environment outside the living space, or may be recirculation air drawn from inside the living space.

The present invention is based on the recognition that practical evaporative cooling can be accomplished in a smaller system when three conditions are met:
passage height is reduced,
passsage length is reduced, and
air flow is laminar and at raised shear rates.

While not wanting to be bound by any particular theory of the invention, it is believed that when the plate spacing defining the dry or wet passages is reduced to approximately 0.6 - 2.5 mm, preferably 0.6 - 2.0 mm, more preferably 0.7 -1.4 mm, most preferably approximately 0.8 - 1.2 mm, air can be moved in the passage with laminar flow and high shear rate. With smaller spacing according to the present invention the speed profile is steep, air flow remains laminar, the boundary layer becomes thinner, and hence heat transfer is dramatically increased. It is known that the longer the passage, the greater the pressure drop between inlet and outlet. Since a smaller passage length is required in the present invention to accomplish the system-effective heat transfer, pressure drop is kept to a minimum. Compared to the prior art heat exchangers relying on turbulent air flow to break up the boundary layer, with turbulent air taking energy and increasing back pressure, the inventive design actually provides efficiencies in heat transfer as well as air flow in both the wet and the dry passages.

In the case of plate spacings greater than 2.5 mm, preferably 2.0 mm, even if flow is kept laminar, the efficiency of conductive and radiative heat transfer is lost. With spacings narrower than 0.6 mm air flow becomes constricted, pressure drop becomes high, and the benefits of the invention are lost.

By designing a heat exchanger on the basis of this new insight, it becomes possible to reduce the length of a heat exchanger passages to about 20% of that of a conventional 400 to 800 mm heat exchanger, i.e., to about 80 to 200 mm. Thus, in accordance with the invention, it has become possible for the first time to provide a truly compact indirect evaporative cooler.

To graphically illustrate the relationship between various passage heights (H) and passage lengths (L), CFD was carried out using the model illustrated in Fig. 2. Inlet air was set at 35°C in all cases. Air was flowed at 3 m/s between two dry plates gradually cooled to 15°C, thus the target temperature for exit air is 15°C.

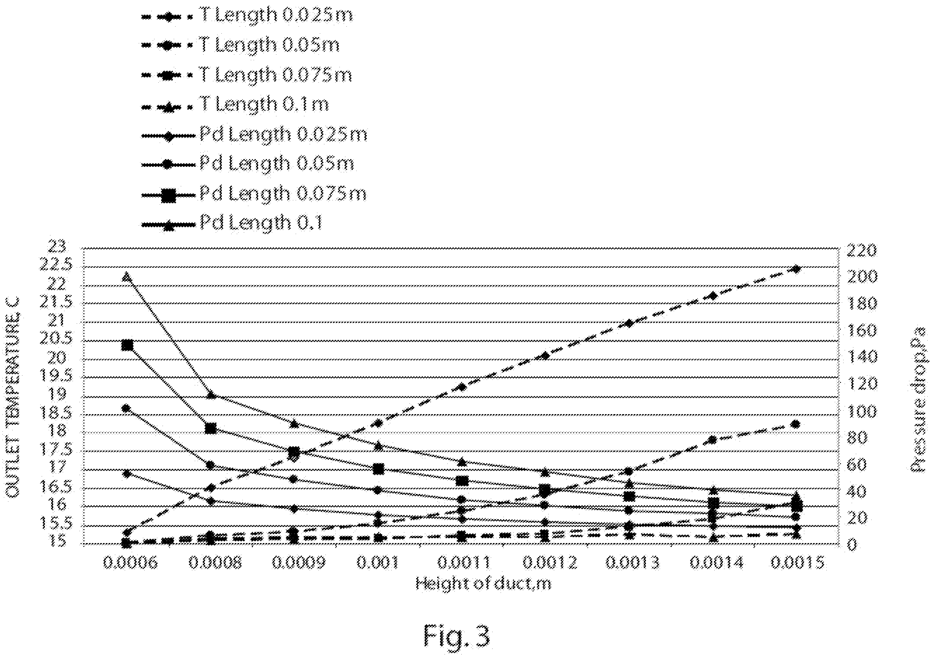

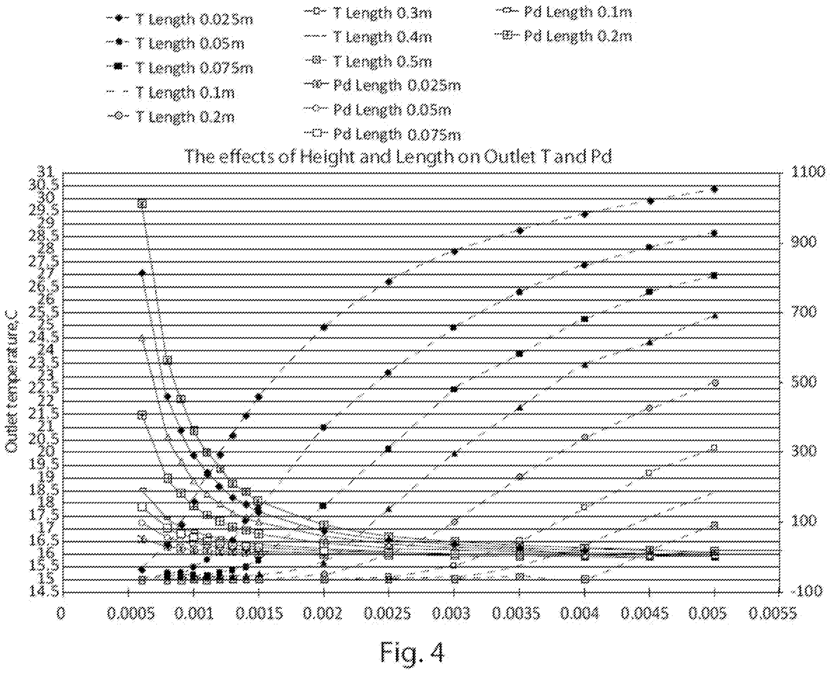

The results are graphically represented in Fig. 3 (showing the results for 0.6 mm to 1.5 mm plate spacing vs. 25 to 100 mm passage length) and Fig. 4 (showing the results for 0.6 mm to 5.0 mm plate spacing vs. 25 to 500 mm passage length).

The criteria for selecting feasible combinations of passage height and passage length are pressure drop and temperature drop, i.e., the air passage must exhibit (a) "manageable" pressure drop and (b) sufficient cooling. If pressure drop is too large, additional or more powerful fans may be required to move air, requiring more energy, reducing system efficiency. Thus, pressure drop should be less than 100 pascal (Pa), preferably less than 60 Pa, more preferably less than 50 Pa, most preferably less than 45 Pa. Regarding cooling, air temperature at the passage outlet should be within 4°C of target, preferably within 1°C of target, most preferably within 0.5°C of target.

In general, it is readily apparent that when passage height is small, pressure drop increases rapidly as passage length is increased. In Fig. 3, the pressure drop (Pd) varies from an unacceptable 200 Pa at 0.6 mm passage height and 100 mm passage length to a negligible 10 Pa at 1.5 mm passage height and 25 cm passage length.

Considering in greater detail the specific case of the 25 mm passage length, it can be seen in Fig. 3 that when the passage height is 0.6 mm and source air introduced into the dry passage inlet at 35°C, the air is about 15.3°C at the passage outlet, thus, heat transfer, measured as outlet temperature, is quite good. However, as the passage height is increased, heat transfer efficiency is reduced and the temperature at the outlet rapidly increases. At a passage height of 0.8 mm the outlet temperature is 16.5°C; at a passage height of 1.0 mm the outlet temperature is 18.3°C; at a passage height of 1.2 mm the outlet temperature is 20°C; at a passage height of 1.5 mm the outlet temperature is 22.5°C; at a passage height of 2.0 mm (Fig. 4) the outlet temperature is 25°C; and at a passage height of 2.5 mm the outlet temperature is 26.8°C. Evaluating these results for acceptable heat transfer efficiency, according to which air temperature at the passage outlet should be within 4°C of target, preferably within 1°C of target, most preferably within 0.5°C of target, it follows that when the passage length is 25 mm, the passage height should be no more than 1.1 mm, preferably no more than 0.7 mm, most preferably not more than 0.65 mm in height.

Evaluating the same 25 mm passage length at various heights on the basis of pressure drop, it can be seen from Fig. 3 that when the passage is 0.6 mm, the pressure drop is an acceptable 50 Pa, and as passage height increases, pressure drop decreases further. Thus, for a 25 mm passage length, pressure drop is acceptable to excellent in all cases.

The remaining passage lengths and heights are evaluated for heat transfer efficiency and pressure drop, and the useful and preferred values are collected in Table 1.

**Table 1**

| Passage | Heat Transfer | | Pd | |
|---|---|---|---|---|
| Length | Preferred H | Acceptable H | Preferred H | Acceptable H |
| 500 | 0.6-4.5 | 0.6-7.5 | ≥ 2.8 | ≥ 1.9 |
| 400 | 0.6-3.7 | 0.6-5.5 | ≥ 2.5 | ≥ 1.7 |
| 300 | 0.6-3.3 | 0.6-4.5 | ≥ 2.2 | ≥ 1.55 |
| 200 | 0.6-2.5 | 0.6-3.5 | ≥ 1.8 | ≥ 1.3 |
| 100 | 0.6-2.2 | 0.6-2.7 | ≥ 1.5 | ≥ 0.9 |
| 75 | 0.6-1.7 | 0.6-2.3 | ≥ 1.1 | ≥ 0.8 |
| 50 | 0.6-1.1 | 0.6-1.7 | ≥ 0.9 | ≥ 0.7 |
| 25 | 0.6-0.7 | 0.6-1.1 | ≥ 0.65 | ≥ 0.5 |

The data in Table 1 is plotted in Fig. 5, wherein dots represent the bounds of heat transfer, Xs represent the bounds of pressure drop, dash lines represent acceptable values, and solid lines represent preferred values. The scale of the graph changes above 2.0 mm passage height. For heat transfer, all passage heights to the left of the lines are included. For pressure drop, all passage heights to the right of the lines are included. Since it is necessary for the heat exchanger core to exhibit both good heat transfer and acceptable pressure drop, it follows that everything between the left and right dash lines is considered within the bounds of the present invention. Everything between the solid lines is particularly preferred core design parameters within the scope of the present invention.

While the CFD has been carried out only for dry plate spacing and passage lengths, the addition of wet side to the simulation would not have been expected to alter the results. While air flowed was a constant 3 m/s in the CFD model, and while this flow rate is believed to most closely approximate practical conditions, the invention is obviously not limited to this flow rate.

The heat exchanger of the present invention, with micro-passages as defined herein, can be adapted to virtually any design, and be used in virtually any system, and offer the benefits of reduced bulk. General systems and materials will be described in the following, without the invention being limited to the exemplary materials.

The air streams may be in counter-current flowing in opposite directions, or one stream may be perpendicular to the other stream. The compact heat exchanger of the present invention can be used not only for evaporative cooling, but also for heat recovery as discussed in greater detail below.

The major difference between the present invention and the prior art is in the reliance on laminar air flow with high shear in narrow air passages. Thus, prior art structures and methods intended to introduce turbulence into the air flow are to be avoided. For example, in a preferred embodiment of the invention, the heat exchanger plates are formed of a hydrophobic material. One side of the plate remains hydrophobic, while the other side of the plate is rendered hydrophilic by suitable treatment discussed below, and wherein the hydrophilic side is surface treated, either before or after being rendered hydrophilic, in order to provide sufficient microcapillary or wicking surface for supply of water for evaporation along the length of the passage. Such a "wet" surface provides very little interference to laminar air flow.

### Device for Evaporative Cooling

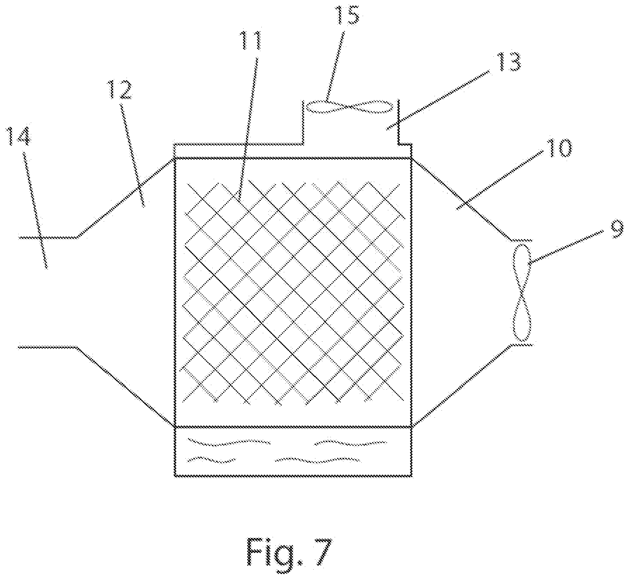

Fig. 7 shows a sectional view of a practical arrangement for a device exploiting the advantages of indirect evaporative cooling. Air enters from external ambient through fan 9, which supplies high pressure air to chamber 10. Heat exchanger 11, also referred to as a core, is manifolded such that high pressure air from chamber 10 can only flow through the dry channels of the heat exchanger, and air which flows through the dry channels must flow all the way through the dry channels, emerging into chamber 12. A portion of the air emerging from the dry channels into chamber 12 is required to be turned around to flow back to through the wet channels spaced between the dry channels of the heat exchanger 11. This requires a pressure in chamber 10 to be sufficient to overcome the flow resistance of the wet channels to leave exhaust 13 at the required flow rate. This pressure may be achieved by providing a baffle or restriction in chamber 12 via air duct 14, the pressure differential across the baffle at the required flow rate resulting in a static pressure in chamber 10.

Fan 9 is required to pressurize air to overcome the pressure loss associated with passing all of the air supplied through the dry channels, plus the static pressure in chamber 12. The static pressure in chamber 12 is sufficient to overcome the flow resistance of the proportion of air flowing through the wet channels to exhaust 13. The static pressure in chamber 12 is regulated by adjusting baffle thereby producing a static pressure differential across the baffle. The air flow through the baffle at such a differential pressure represents a loss of power equal to the product of the air flow and pressure differential. This loss is an additional power load on fan 9 which provides no additional cooling or otherwise useful energy to the air flow. Although fan 9 is shown schematically as an axial flow fan, in practice a centrifugal or combined flow fan is generally used due to the high pressures required.

Fan 15 in the exhaust duct 13 of the heat exchanger may optionally be provided to produce a negative pressure relative to the pressure in chamber 12 sufficient to produce the required air flow through the wet passages of the heat exchanger. Thus the static pressure immediately before fan 15 will be the sum of the static pressure in chamber 12 and the pressure differential required for the air flow through the wet passages of the heat exchanger 11. The operation of the fans 9 and 15 can be controlled through electronic speed controllers or other means to produce a desired ratio of air flow between the supply air and exhaust air. Furthermore, the magnitude and/or ratio of these air flows can be readily adjusted by varying the speeds of the two fans 9, 15 thereby enabling optimization of the performance of the indirect evaporative cooler. This allows the indirect cooler to operate under a wide range of conditions through direct control of the fans without the need to intervene and adjust mechanical baffles as in prior art designs, and also allows for automatic control of the operation of the indirect cooler, for example, under the control of a programmable electronic controller.

In a typical indirect evaporative cooler, with a supply to exhaust ratio of 1:1, the fan is required to deliver air at around 600 Pa. If the supply air required is, say, n units, the power required will be 600×2n=1,200n power units. This typically produces a static pressure of around 150 Pa in chamber 48 and thus a pressure differential of 150 Pa across the wet passages to exhaust. The pressure differential across the dry passages of the heat exchanger is 600 Pa-150 Pa=450 Pa.

### The Plates

The plates 16 separate dry product air passages and wet working air passages. Each plate is made of a thin material to allow easy heat transfer across this pate and thus to readily allow heat to transfer from the dry product passage to the wet working passage. The plate is preferably formed of a plastic film such as a thin-wall dense film or sheet of polyethylene, polypropylene, polystyrene, polyvinyl chloride, polyethylene terephthalate, or the like material having good vapor barrier properties. Although a low permeability material such as plastic does not readily transfer heat, heat transfer perpendicularly through the plastic layer will be good since the plates according to the present invention are very thin.

Air streams generally flow between two plates rather than across one plate. If two such plates are aligned with dry sides facing, then the air streams flow between the two plates on the dry sides; if the wet sides are facing, the air streams flow between the plates on the wet sides. In embodiments having more than two plates, air streams may first flow between the dry sides of two plates, then flow through one or both plates and enter wet passages, in which they will flow across one of the two previous plates (on the reverse side) and the wet side of a third plate.

Plates of various materials and configurations are described in US Pat. Nos. 6,581,402; 6,705,096; 7,228,699; and 8,468,846, the disclosures of which being incorporated herein by reference.

### The Wicking Material / Surface Treatment

While the plate 16 may be formed of a hydrophobic polymer such as extruded polypropylene, one surface of the polymer may be rendered substantially hydrophilic by subjecting it to Corona treatment, plasma discharge, plasma jet, flame treatment, acid etching and nano-surfacing or nano-coating.

The hydrophilic side of the plate may be provided with an additional liquid retaining layer formed from a fibrous non-woven material 17. Although reference may be made to a liquid retaining surface, it is clearly understood that the surface is in fact a liquid retaining and releasing surface. The evaporation rate off of a hydrophobic woven or spun bond material where water has been impregnated in between the fibers is higher than from a hydrophilic material where water has been absorbed into the material and between the fibers. This means that a much smaller temperature difference across the plate is required to achieve the same evaporation rate, which therefore increases the heat transfer rate. See for example WO 2010/011687 (Gillan) teaching a hydrophobic fiber sheet formed to wick evaporative fluid.

In the present invention the wicking material or wicking layer/treatment is relatively thin, and thus contains only a small amount of water. Accordingly, the system is efficient in that air rather than water is cooled.

The wicking material may be hydrophilic or hydrophobic, and suitable materials include cellulose, fiberglass, organic fibers, organic-based fibers, porous plastics, carbon-based fibers, polyesters, polypropylene, silicon-based fibers and combinations of these substances. The wick layer material may be in a number of forms: films, weaves, braids, fibers, beds of particles such as beads and combinations thereof.

A substantially compliant nonwoven wicking material is disposed on and fixedly attached at a number of locations to the hydrophilic surface of the first polymer substrate. Similarly, substantially compliant nonwoven material is also disposed on and fixedly attached at a number of locations to the hydrophilic surface of the second polymer substrate. The substantially compliant nonwoven material can be a spunbonded material, a melt blown material, hydroentangled (spunlaced) material or made through any other processes such as co-forming, airlaying, wetlaying, carding webs, thermal bonding, needle punching, chemically bonding or combinations thereof. Embodiments of spunbonded material include polyolefin, Polyethylene terephthalate (PET) and nylon. Embodiments of melt blown material include polyolefin, Polyethylene terephthalate (PET) and nylon. Embodiments of hydroentangled material include cotton, rayon or viscose staple fiber, lyocell staple fiber, polyolefin staple fiber, polyester staple fiber and nylon staple fiber.

Nonwoven webs can be formed from fibers and filaments based on hydrophobic or hydrophilic polymers. Representative, but not complete, examples of polymers that are hydrophobic for making nonwoven webs are polyolefins and polyethylene terephthalate. Representative, but not complete, examples of hydrophilic polymers for making nonwoven webs include cellulosic materials like cotton, rayon or viscose etc. The application of the fact that under suitable conditions of porosity, fiber/filament diameter, density (GSM) etc, significant capillary action and wicking of water can occur in a web has been innovatively applied in the invention. The invention innovatively utilizes the porosity of certain porous nonwoven webs that can often be sufficient to enable the easy transport of water and other fluids because of wicking caused by capillary action.

The prior art teaches that hydrophilic materials can better hold water. However, in relation to the cooling apparatus, the application of this quality has a disadvantage that in the case of a nonwoven web made from hydrophilic polymers, some of the water will swell the fibers and the rest will go around and over the fibers. This would lose the rigidity in the heat exchanger pads. Further, in relation to the cooling apparatus, hydrophilic non-woven would swell, while one of our objectives is to retain the thinnest film of the water to facilitate better heat transfer and evaporation. Porous low density nonwoven webs made from hydrophobic fibers or filaments can transfer water through wicking action. Water can flow along, around and over but not through the hydrophobic polymer fibers. The porosity and associated wicking action by a porous nonwoven web can render the nonwoven web effectively hydrophilic in terms of its capability to be wet and easily spread water even if the fibers or filaments constituting the nonwoven web are made from hydrophobic polymers. The invention thus innovatively employs the materials known to be hydrophobic for the retention of water as required. The invention overcomes the problem in maintaining rigidity of heat exchanger pads due to the use of hydrophilic material, as evidenced by relevant prior art, by employing hydrophobic material.

Examples of fibers that are hydrophobic are polyolefins and polyethylene terephthalate. Porous low density nonwoven webs made from these hydrophobic fibers or filaments can be hydrophilic through wicking action.

### Spacers

The plates may be separated by any conceivable spacing means 18. The plates can be deformed with a punch or a roller to introduce raised points or walls. Adhesive or plastic can be printed to provide the desired structures at the desired height.

The spacers may be spaced apart a distance of 30-50 mm. Keeping in mind the thinness and minimal structural integrity of the plates, the spacers should be spaced as far apart as possible while still ensuring proper spacing of the sheets.

### Heat Scavenging Heat Exchanger

The device may be operated in winter months to scavenge heat from exhaust gases of a space and thus pre-heat fresh air, while simultaneously humidifying the fresh air.

Such an indirect evaporative cooler would have cycle selection means, so that during summer months, it may be used to provide cooled, non-humidified air, and during winter months, it may be used to scavenge heat from gases exiting a space while simultaneously humidifying the space.

In winter months, it is advantageous to exchange heat between exhaust air leaving a warmed space and cold fresh air being brought in from the atmosphere, i.e. the outdoor air or other source of environmental air. This reduces the heat required to warm the fresh air. The present invention also allows the addition of humidity to the fresh air, thus addressing another winter problem: cold outside air that has condensed moisture out and therefore has a low absolute humidity or extremely dry air that results in dry inside air as the moisture on the inside reduces with fresh air changes with the outside. The "cycle selection" as to which stream of air is exhausted to the atmosphere, and which goes to the space to be conditioned, is a feature of embodiments having this arrangement.

### Modular Design / Scaling Up

Heat exchangers can be manufactured in standard sizes as modules, and a number of these modules can be assembled to provide an air handler with a capacity required for a given living or working space.

### System Operation

During operation, an evaporative liquid is distributed to the substantially compliant nonwoven material of each of the hydrophilic surfaces of the unit and a fluid flows within a space separating each of the units with heat being exchanged between the evaporative liquid and the fluid, and another fluid flowing through at least some passages from the number of passages. The other fluid exchanges heat with the hydrophilic surface. (Heat is transferred from the nonwoven material to the hydrophilic surface/wet side and through the plate to the hydrophobic surface/dry side). In one instance, the fluids are air, and the heat exchanger has moist air from the evaporated cooling of the substantially compliant nonwoven material having the evaporative liquid distributed over and dry air flowing through the passages and being cooled. In that instance to a heat exchanger is referred to as a Dry Air, Moist Air (DAMA) heat exchanger.

As disclosed hereinabove, in the indirect evaporative cooling heat exchanger of this invention described herein above, during operation, an evaporative liquid is distributed to the substantially compliant nonwoven material of each of the hydrophilic surfaces of a unit and a secondary fluid flows within a space separating each of the units with heat being exchanged between the evaporative liquid and the fluid. A primary fluid flows through at least some passages from a number of passages. The primary fluid exchanges heat with the hydrophilic surface. (Heat is transferred from the nonwoven material to the hydrophilic surface and through the substrate to the hydrophobic surface). Another evaporative liquid is distributed to the direct evaporative component. The direct evaporative component is positioned downstream from the indirect evaporative cooling component and receives at least a portion of the primary fluid from the indirect evaporative cooling component. In the direct adiabatic evaporative component, the primary fluid is cooled by addition of the other evaporative liquid. During the cooling process in the adiabatic direct evaporative component, there is no change in the total energy or enthalpy, but, a portion of sensible heat of the primary fluid is converted into latent heat.

In one instance, the two-stage evaporative cooling apparatus of this invention includes a primary fluid supply component, located upstream from the indirect evaporative cooling component of this invention and supplying the primary fluid to the indirect evaporative cooling component of this invention. During operation the primary fluid supply component draws ambient fluid through a filtering component and supplies filtered ambient fluid as the primary fluid. The filtering component can include one of a variety of filters (including but not limited to conventional filters, carbon filters, electrostatic filters, etc.). A first evaporative liquid supply system supplies the evaporative liquid to the indirect evaporative cooling component of this invention. A second evaporative liquid supply system supplies the other evaporative liquid to the direct adiabatic evaporative cooling component. In one instance, a liquid holding component (such as a tank) provides a supply of the evaporative liquid and the other evaporative liquid. The first evaporative liquid supply system (a pump in one instance) and the second evaporative liquid supply system (another pump in one instance) are disposed inside the liquid holding component. The first evaporative liquid supply system, the second evaporative liquid supply system and a liquid holding component are comprised of aseptic material. A liquid disinfection system can be disposed to receive the evaporative liquid and the other evaporative liquid and render both of them disinfected. In one embodiment the liquid disinfection system includes a system utilizing ultraviolet (UV) radiation in order to disinfect the evaporative liquid on the other evaporative liquid. It should be noted that other liquid disinfecting systems, such as, but not limited to, system utilizing ozone and other liquid disinfecting systems are within the scope of this invention.

Note that the indirect evaporative cooler of the invention may also accomplish both direct and indirect evaporative cooling of the product air stream. A portion of the dry sides may be wetted, in a manner similar to the wick materials used on wet sides or in a different manner, so as to cause further cooling of the product air stream. This wet portion of the dry sides may advantageously be placed downstream of the dry portion of the dry sides, so that prior to being humidified in the direct evaporation cooling process, the sensible temperature of the product air stream is reduced as much as possible. One particular advantage of this ordering is that below approximately 65 degrees F., modest increases in humidity cause disproportionate reduction in air temperatures, in accordance with standard psychometric charts. In another embodiment of the invention, this wetted portion of the dry sides constitutes the final 1 to 25 percent of the surface area of the dry passages.

Some embodiments of the invention may utilise 3D printing for construction of the device. Accordingly, in some embodiments the present invention may reside in a digital blueprint comprising a digital file in a format configured for use with rapid prototyping and computer aided design (CAD) and/or manufacturing, such as being in the STL (stereolithography) file format. Such digital blueprint files, whether produced by performing a three dimensional scan of an embodiment of the invention, or produced by a CAD development software tool, or the like, are within the scope of the present invention.

## Claims

1. An indirect evaporative cooler comprising
- a heat exchanger core having heat exchange plates defining alternating wet and dry air flow passages, wherein the passage height, measured as space between plates defining at least the dry air flow passages, and the length of the air flow passages fall within following ranges :
| Passage | Passage |
|---|---|
| Length (mm) | Height (mm) |
| 200 | 1.3 - 3.5 |
| 100 | 0.9 - 2.7 |
| 75 | 0.8 - 2.3 |
| 50 | 0.7 - 1.7 |
| 25 | 0.6 - 1.1 |

2. The indirect evaporative cooler as claimed in Claim 1, wherein the passage height of at least the dry air flow passages and the length of the passages fall within following ranges :
| Passage | Passage |
|---|---|
| Length(mm) | Height (mm) |
| 200 | 1.8 - 2.5 |
| 100 | 1.5 - 2.2 |
| 75 | 1.1 - 1.7 |
| 50 | 0.9 - 1.1 |
| 25 | 0.65 - 0.7 |

3. The indirect evaporative cooler as claimed in claim 1 or claim 2, wherein passage length is from 80 to 200 mm.

4. The indirect evaporative cooler as claimed in any one of claims 1 to 3, wherein the space between plates defining dry passage height is from 0.6 mm to 2.5 mm.

5. The indirect evaporative cooler as claimed in claim 4, wherein the space between plates defining dry passage height is from 0.7 mm to 1.4 mm.

6. The indirect evaporative cooler as claimed in claim 5, wherein the space between plates defining dry passage height is from 0.8 mm to 1.2 mm.

7. The indirect evaporative cooler as claimed in any one of claims 1 to 6, wherein the space between plates defining wet passage height is from 0.6 mm to 2.5 mm.

8. The indirect evaporative cooler as claimed in claim 7, wherein the space between plates defining wet passage height is from 0.7 mm to 1.4 mm.

9. The indirect evaporative cooler as claimed in claim 8, wherein the space between plates defining wet passage height is from 0.8 mm to 1.2 mm.

## Patentansprüche

1. Indirekter Verdunstungskühler, umfassend
- einem Wärmetauscherkern, der Wärmetauschplatten aufweist, die abwechselnd Nass- und Trockenluftstromkanäle definieren, wobei die Kanalhöhe, gemessen als Raum zwischen Platten, die mindestens die Trockenluftstromkanäle definieren, und die Länge der Luftstromkanäle in folgende Bereiche fallen:
| Kanal | Kanal |
|---|---|
| Länge (mm) | Höhe (mm) |
| 200 | 1,3 - 3,5 |
| 100 | 0,9 - 2,7 |
| 75 | 0,8 - 2,3 |
| 50 | 0,7 - 1,7 |
| 25 | 0,6 - 1,1 |

2. Indirekter Verdunstungskühler nach Anspruch 1, wobei die Kanalhöhe zumindest der Trockenluftstromkanäle und die Länge der Kanäle in folgende Bereiche fallen:
| Kanal | Kanal |
|---|---|
| Länge (mm) | Höhe (mm) |
| 200 | 1,8 - 2,5 |
| 100 | 1,5 - 2,2 |
| 75 | 1,1 - 1,7 |
| 50 | 0,9 - 1,1 |
| 25 | 0,65 - 0,7 |

3. Indirekter Verdunstungskühler nach Anspruch 1 oder Anspruch 2, wobei die Kanallänge 80 bis 200 mm beträgt.

4. Indirekter Verdunstungskühler nach einem der Ansprüche 1 bis 3, wobei der Raum zwischen den Platten, der die Trockenkanalhöhe definiert, 0,6 mm bis 2,5 mm beträgt.

5. Indirekter Verdunstungskühler nach Anspruch 4, wobei der Raum zwischen den Platten, der die Trockenkanalhöhe definiert, 0,7 mm bis 1,4 mm beträgt.

6. Indirekter Verdunstungskühler nach Anspruch 5, wobei der Raum zwischen den Platten, der die Trockenkanalhöhe definiert, 0,8 mm bis 1,2 mm beträgt.

7. Indirekter Verdunstungskühler nach einem der Ansprüche 1 bis 6, wobei der Raum zwischen den Platten, der die Nasskanalhöhe definiert, 0,6 mm bis 2,5 mm beträgt.

8. Indirekter Verdunstungskühler nach Anspruch 7, wobei der Raum zwischen den Platten, der die Nasskanalhöhe definiert, 0,7 mm bis 1,4 mm beträgt.

9. Indirekter Verdunstungskühler nach Anspruch 8, wobei der Raum zwischen den Platten, der die Nasskanalhöhe definiert, 0,8 mm bis 1,2 mm beträgt.

## Revendications

1. Refroidisseur évaporatif indirect comprenant
- un noyau d'échangeur thermique présentant des plaques d'échange thermique définissant des passages d'écoulement d'air humide et sec alternatifs, dans lequel la hauteur de passage, mesurée comme un espace entre des plaques définissant au moins les passages d'écoulement d'air sec, et la longueur des passages d'écoulement d'air se trouvent dans les plages suivantes :
| Longueur | Hauteur |
|---|---|
| de passage (mm) | de passage (mm) |
| 200 | de 1,3-3,5 |
| 100 | de 0,9-2,7 |
| 75 | de 0,8-2,3 |
| 50 | de 0,7-1,7 |
| 25 | de 0,6-1,1. |

2. Refroidisseur évaporatif indirect selon la revendication 1, dans lequel la hauteur de passage d'au moins les passages d'écoulement d'air sec et la longueur des passages se trouvent dans les plages suivantes :
| Longueur | Hauteur |
|---|---|
| de passage (mm) | de passage (mm) |
| 200 | de 1,8-2,5 |
| 100 | de 1,5-2,2 |
| 75 | de 1,1-1,7 |
| 50 | de 0,9-1,1 |
| 25 | de 0,65-0,7. |

3. Refroidisseur évaporatif indirect selon la revendication 1 ou la revendication 2, dans lequel la longueur de passage est de 80 à 200 mm.

4. Refroidisseur évaporatif indirect selon l'une quelconque des revendications 1 à 3, dans lequel l'espace entre des plaques définissant la hauteur de passage sec est de 0,6 mm à 2,5 mm.

5. Refroidisseur évaporatif indirect selon la revendication 4, dans lequel l'espace entre des plaques définissant la hauteur de passage sec est de 0,7 mm à 1,4 mm.

6. Refroidisseur évaporatif indirect selon la revendication 5, dans lequel l'espace entre des plaques définissant la hauteur de passage sec est de 0,8 mm à 1,2 mm.

7. Refroidisseur évaporatif indirect selon l'une quelconque des revendications 1 à 6, dans lequel l'espace entre des plaques définissant la hauteur de passage humide est de 0,6 mm à 2,5 mm.

8. Refroidisseur évaporatif indirect selon la revendication 7, dans lequel l'espace entre des plaques définissant la hauteur de passage humide est de 0,7 mm à 1,4 mm.

9. Refroidisseur évaporatif indirect selon la revendication 8, dans lequel l'espace entre des plaques définissant la hauteur de passage humide est de 0,8 mm à 1,2 mm.
